# EUROPÄISCHE PATENTANMELDUNG

(11) **EP 4 800 239 A1**
(43) Veröffentlichungstag der Anmeldung: **02.09.2026**
(21) Anmeldenummer: 26161327.7
(22) Anmeldetag: 27.02.2026
(51) Int. Cl.: F03D 13/10, E04H 12/34, F03D 13/20, F03D 80/80

(54) **VERFAHREN ZUR ERRICHTUNG EINES ZAHNSTANGENAUFZUGSMASTES IN EINEM TURM**

(30) Priorität: 28.02.2025 DE 102025107799
(71) Anmelder: GEDA GmbH, 86663 Asbach-Bäumenheim (DE)
(72) Erfinder: Uhl, Matthias, 86720 Nördlingen (DE); Ziegelmeier, Manuel, 86657 Bissingen (DE)
(74) Vertreter: Cremer & Cremer

(57) **Zusammenfassung**

Die vorliegende Erfindung bezieht sich auf ein Verfahren zur Errichtung eines Zahnstangenaufzugsmastes (1) in einem Turm (50), wobei der Aufbau gleichzeitig mit dem Aufbau des Turms erfolgt. Der Turm wird aus einzelnen, vorgefertigten Turmelementen wie Turmabschnitten (51, 51^{I}, 51^{II}, 51^{III}, 51^{IV}, 51^{V}, 51^{VI}) aufgebaut. Der aufzubauende Zahnstangenaufzugsmast wird aus mehreren einzelnen Mastelementen (10, 10^{I}, 10^{II}, 10^{III}, 10^{IV}, 10^{V}, 10^{VI}) errichtet. Jedes Mastelement hat ein Führungsprofilmodul und ein Antriebsprofilmodul. Die Mastelemente sind an den Turmelementen gelenkig angebunden, wodurch eine Relativposition der Mastelemente in dem Turm verändert werden kann. Auf einem Untergrund in dem Turm wird eine höhenverstellbare Plattform aufgestellt, auf welcher ein unterstes Mastelement (10^{I}) des Zahnstangenaufzugsmasts angeordnet wird. Auf das unterste Mastelement wird ein weiteres Mastelement (10^{II}) abgesetzt und mit diesem verbunden, worauf wiederum noch weitere Mastelemente (10^{III}, 10^{IV}, 10^{V}, 10^{VI}) abgesetzt und jeweils mit dem davor angeordneten Mastelement verbunden werden, wodurch der Zahnstangenaufzugsmast errichtet wird.

## Beschreibung

Die vorliegende Erfindung betrifft ein Verfahren zur Errichtung eines Zahnstangenaufzugsmastes in einem Turm, während der Turm errichtet wird. Insbesondere ist die Erfindung ausgerichtet auf die Errichtung eines Zahnstangenaufzugsmastes in einem Turm einer Windkraftanlage. Grundsätzlich ist die Erfindung jedoch ebenfalls für andere turmartige bzw. turmähnliche Gebäude geeignet.

Ein Anwendungsfall des durch die Erfindung angegebenen Verfahrens ist der Aufbau eines Zahnstangenaufzugsmastes in einem Turm einer Windkraftanlage. In Windkraftanlagen sind standardmäßig Aufzüge vorgesehen, mit denen unter anderem Menschen, aber auch Material, nach oben, zum Maschinenhaus, auch als Gondel bezeichnet, der Windkraftanlage befördert werden.

### Stand der Technik

Derzeit werden in Windkraftanlagen fast ausschließlich Seilaufzüge eingesetzt. Seilaufzüge sind einfach im Aufbau und außerdem kostengünstig, ziehen jedoch etliche Probleme nach sich, die sich verstärken, wenn die Windkraftanlagen zunehmend höher werden. Hintergrund der Problematik ist, dass die Türme verhältnismäßig großen Schwankungen ausgesetzt sind. Dies führt dazu, dass das Innenleben des Turmes, also der Seilaufzug und weitere Anlagen wie beispielswiese Notleitern und Kabeltrassen, ebenfalls mitschwanken und die Seile und auch Stromversorgungskabel etc. dadurch beschädigt werden können. Es ist absehbar, dass neue Windkraftanlagen noch höher werden. Derzeit sind die Naben typischerweise auf einer Höhe von ca. 150 Meter angeordnet. Neuere Projekte werden bereits mit Nabenhöhen von 180 bis 200 Meter geplant. Damit werden die schon bekannten Probleme der Seilaufzüge noch häufiger auftreten. Ein beschädigtes oder gar gebrochenes Seil muss getauscht werden. Ein kompletter Seilaustausch bedingt das Abschalten der Windkraftanlage, was hohe Kosten nach sich ziehen kann.

Es wäre deshalb im Ergebnis vorteilhaft, wenn Zahnstangenaufzüge in solch hohen Türmen, wie sie beispielsweise in Windkraftanlagen eingesetzt werden, eingebaut werden könnten. Zahnstangenaufzüge arbeiten in der Regel zuverlässiger, sind jedoch im Vergleich zu Seilaufzügen aufgrund der benötigten Anlagenteile teurer.

Sehr häufig werden in Windkraftanlagen Hybridtürme aus Beton und Stahl eingesetzt. Hierbei ist der untere Teil des Turmes, ungefähr bis zur Mitte oder die unteren zwei Drittel, aus Beton gefertigt und der obere Teil des Turmes wird aus Stahlröhren gefertigt. Der Betonteil des Hybridturmes wird typischerweise nicht vor Ort gegossen, sondern wird im Werk vorgefertigt und zur Baustelle transportiert. Die Betonringe sind üblicherweise in drei Teile pro Ring unterteilt, damit sie transportierbar sind. Üblich ist eine Höhe von 2,30 bis 3,00 Meter. Vor Ort werden dann die drei zusammengehörenden Teile zu einem Ringsegment aus Beton zusammengesetzt und darauf wird das nächste, wiederum aus mehreren Teilen zusammengesetzte Ringsegment aufgesetzt und mit dem unteren verbunden. Auf diese Art und Weise wächst der Turm in die Höhe. Üblicherweise wird am Ende des Betonturmteils eine Plattform eingezogen, auf welcher die Stahlröhren des Stahlturmteils aufgesetzt werden. Ferner dient die Plattform dazu, dass die Betonringe verspannt werden können. Hierzu werden Stahlseile an der Plattform befestigt, nach unten gezogen und dort fixiert, wodurch die Betonringe miteinander verspannt werden. Hierbei setzt sich der Betonturm.

Typischerweise wird der Innenausbau des Turmes, d. h. der Einbau des Seilaufzugs bzw. der hierfür notwendigen Komponenten sowie der Kabeltrassen und der Notleiter zeitgleich mit dem Aufbau des Turms durchgeführt. Typischerweise wird folglich pro Betonringsegment auch das entsprechende Innenleben segmentweise bereitgestellt und in der Regel vor Ort, also auf der Baustelle montiert, jeweils bevor das Ringsegment auf das darunter befindliche Ringsegment aufgesetzt wird. Wie bereits vorstehend erwähnt, werden auf die Plattform und damit auf den Betonturm, noch mehrere Stahlröhren, insbesondere zwei bis vier Stahlröhren, aufgesetzt. Der Innenausbau der Stahlröhren, d. h. das Anbringen der Seilaufzugskomponenten, der Kabeltrassen und der Notleiter etc., sind hier in der Regel schon im Werk erfolgt.

Seilaufzüge können erst nach Abschluss des Stahlturmes vollständig eingebaut werden, da das Seil am obersten Punkt umlaufen muss. Somit ist ein Seilaufzug erst nach vollständigem Aufbau des Turmes der Windkraftanlage oder jedes anderen Turmes betriebsbereit. An sich darf der Seilaufzug jedoch dann noch nicht genutzt werden. Der Einsatz ist auch nach Abschluss dieser Aufbauarbeiten nur unter großen Einschränkungen möglich, da die Seilaufzüge nur für den permanenten Einsatz, also dauerhaft verbaut vorgesehen sind. Demensprechend müssen sie vor der offiziellen Freigabe durch eine zugelassene Überwachungsstelle geprüft werden und dürfen erst danach in Betrieb genommen werden. In der Praxis ist es jedoch so, dass der Einsatz vor Abnahme und Zulassung üblich ist. Aus praktischen Gründen ist dies nachvollziehbar; für die Arbeiter ist es von großem Vorteil, wenn sie mit Hilfe des Seilaufzugs im Turm fahren können, statt über die Leiter auf- und abzusteigen - ganz davon abgesehen, dass die Leiter an sich nur eine Notleiter ist.

Beim Versuch, einen Zahnstangenaufzug in einen Turm einer Windkraftanlage einzubauen, zeigte sich jedoch, dass nicht einfach die Profile, die für den Einbau eines Seilaufzugs in einen Turm erforderlich sind, durch die entsprechenden Zahnstangenaufzugsprofile ersetzt werden können. Ein Zahnstangenantrieb erfordert einen nahezu nahtlosen Übergang der einzelnen Zahnstangenmodule, also von einem Zahnstangenmodul auf das nächste, damit das Antriebsritzel immer im Eingriff ist. Ein Zahnstangenaufzug benötigt ein starres Führungsprofil, an dem die Zahnstange befestigt ist.

Die europäische Patentanmeldung EP 3 379 079 A1 offenbart eine vertikal bewegbare Arbeitsplattform zur Verwendung u. a. als Montage- und Wartungsplattform in einem Turm, z. B. einem Stahlturm einer Windenergieanlage. Es ist in einer Ausführung ein aus einer Mehrzahl von Mastelementen, sog. Mastsektionen, aufgebauter Mast vorgesehen, entlang dessen die Arbeitsplattform vertikal bewegt wird. Als bevorzugte Ausführung weist jede Mastsektion eine Zahnstange und eine Führungsschiene auf. Infolgedessen offenbart diese Druckschrift das Einbauen und Nutzen eines Zahnstangenaufzugs in einem Turm einer Windenergieanlage.

Die US-amerikanische Patentanmeldung US 2021/0362980 A1 offenbart einen Zahnstangenaufzugsmast, der über einen Führungsholm und eine Zahnstange verfügt und aus einzelnen Mastelementen besteht, die übereinander montiert werden. Das unterste Mastelement ist mit einem Unterteil verschweißt, das aus einer zentralen Plattform und mehreren Stützen besteht. Die Stützen sind sowohl ein- und ausfahrbar als auch höhenverstellbar, um Niveauunterschiede des Untergrunds auszugleichen. Es handelt sich um einen typischen Materialaufzug, wie er auf Baustellen zum Einsatz kommt.

### Aufgabenstellung

Aus dem Vorstehenden wird klar, dass es vorteilhaft wäre, in einem hohen Turm, beispielsweise in einer Windkraftanlage, einen Zahnstangenaufzug vorzusehen. Dauerhaftigkeit, Betriebssicherheit und geringere Anfälligkeit bei Schwankungen des Turmes, sind einige der Vorteile, die ein Zahnstangenaufzug mit sich bringen würde.

Damit ein Zahnstangenaufzug jedoch vom Markt angenommen wird, ist es notwendig, dass der Aufbau effizient und sicher vonstattengehen kann, insbesondere, dass es möglich ist, die für den Antrieb erforderliche Zahnstange, so zu errichten, dass eine durchgängige Verzahnung zur Verfügung steht, auf der das Aufzugsritzel und damit der Fahrkorb störungsfrei laufen können.

Aufgabe der vorliegenden Erfindung ist daher, ein Verfahren zur Errichtung eines Zahnstangenaufzugsmastes in einem Turm, insbesondere in einem Turm einer Windkraftanlage, bereitzustellen, das gleichzeitig mit dem Aufbau des Turmes erfolgen kann und mit dem ein durchgängiges Antriebsprofil herstellbar ist.

### Erfindungsbeschreibung

Diese Aufgabe wird gelöst durch ein Verfahren nach Patentanspruch 1. Vorteilhafte Ausgestaltungen sind Gegenstand der Unteransprüche.

Der Turm wird aus einzelnen, vorgefertigten Turmelementen, auch Turmabschnitte genannt, aufgebaut.

Wie im Stand der Technik bekannt und üblich, wird der Turm aus vorgefertigten Elementen wie beispielsweise Betonteilen und/oder Stahlröhren aufgebaut. Der übliche Verfahrensablauf zum Turmaufbau selbst wird durch das vorliegende Verfahren zum Errichten eines Zahnstangenaufzugsmastes im Inneren des Turmes nicht wesentlich geändert. Das Grundprinzip bleibt dasselbe, unabhängig vom eingesetzten Material werden vorgefertigte Turmbauelemente nach und nach, Zug um Zug, zum fertigen Turm zusammengesetzt und der Turm so aufgebaut.

Wie ebenfalls aus dem Stand der Technik bekannt ist, weist der einzubauende Zahnstangenaufzugsmast zumindest ein Führungsprofil und ein Antriebsprofil mit Verzahnung auf.

Ein Beispiel eines Antriebsprofils mit Verzahnung ist eine Zahnstange.

Alternativ ist vorgesehen, dass das Führungsprofil sowohl eine Führungsfläche als auch eine Verzahnung aufweist. Im letzteren Fall ist somit eine einzige Profilstange, beispielsweise aus einem Metall wie Stahl (Profilstahl) oder Aluminium (Aluminiumprofil), vorgesehen, die sowohl Führungsprofil als auch Antriebsprofil ist und beide Funktionen vereint.

Typischerweise ist nicht nur ein einzelnes Führungsprofil, sondern typischerweise sind zwei parallel zueinander angeordnete Führungsprofile vorhanden. Sie werden häufig auch als Holme oder Leitern bezeichnet.

Im Falle von zwei parallel angeordneten Führungsprofilen hat bevorzugt ein Führungsprofil auf Antriebsprofilfunktion, weist folglich zusätzlich zur Führungsfläche auch eine Verzahnung auf.

Die beiden Führungsholme sind parallel zueinander angeordnet und weisen einen definierten und gleichbleibenden Abstand zueinander auf. Anders als bei herkömmlichen Leitern, wie sie bei herkömmlichen Zahnstangenaufzügen eingesetzt werden, sind vorliegend die beiden Führungsholme nicht durch eine Mehrzahl an Leitersprossen miteinander verbunden, sondern es ist pro Mastelement zumindest ein, bevorzugt zwei, Haltebügel vorhanden. Über diesen Haltebügel ist das Mastelement an die Turmwand angebunden. Der Haltebügel weist eine Querverbindung auf, in der Art einer Querstange, auf welcher die Führungsholme befestigt sind.

Der komplette Zahnstangenaufzugsmast wird nicht in einem Stück, sondern abschnittsweise aus einzelnen Elementen, vorliegend als Mastelemente bezeichnet, zusammengebaut. Die einzelnen Mastelemente werden nacheinander, d. h. übereinander, angeordnet und miteinander zu einem durchgängigen Zahnstangenaufzugsmast verbunden. Jedes Mastelement weist entsprechend ein Führungsprofilmodul und ein Antriebsprofilmodul auf. Anders ausgedrückt sind pro Mastelement ein Stück des Führungsprofils und ein Stück des Antriebsprofils vorhanden. Das Führungsprofil und das Antriebsprofil, im einfachsten Falle ein einzelnes Profil mit Führungs- und Antriebsfunktion, des Zahnstangenaufzugsmastes sind in einzelne Teile unterteilt - im Rahmen dieser Anmeldung als Führungsprofilmodul und als Antriebsprofilmodul bezeichnet. Wie schon erwähnt, kann das Antriebsprofilmodul als Verzahnung auf dem Führungsprofilmodul ausgebildet sein.

Jedes Mastelement ist an seinem zugehörigen Turmsegment, d. h. dort wo es sich im zusammengebauten Zustand befindet, gelenkig angebunden. Hierzu ist beispielsweise ein Haltebügel, auch als Sicherungsbügel oder Verankerungsbügel bezeichnet, vorhanden, wie zuvor schon kurz erwähnt. Dieses Halteelement ist an der Turmwand gelenkig angebunden und ist ebenfalls gelenkig mit dem Mastelement verbunden. Dies bringt den Vorteil mit sich, dass in einem ersten Schritt das Mastelement und gegebenenfalls damit assoziierte Komponenten wie Kabeltrassen und Notleitern sozusagen im eingeklappten Zustand, d. h. verhältnismäßig nahe an der Turmwand befindlich, eingebaut und in dieser Position gesichert werden können.

Das Einbauen kann vor Ort, unmittelbar vor bzw. während des Zusammenbaus der Turmkomponenten erfolgen. Besonders bevorzugt erfolgt dies jedoch bereits im Werk. In dem gesicherten Transportzustand können die Mastelemente mit den Turmbauteilen zur Baustelle transportiert werden. Dadurch kann der Aufbau des Turms schneller erfolgen, was (teure) Kranzeiten spart. Im wandnahen, sozusagen eingeklappten Zustand sind die Mastelemente nicht im Weg beim Aufbau des betroffenen Turmsegments oder Turmabschnitts.

Unabhängig vom Turmbaumaterial, z. B. Beton, Stahl oder Holz, kann nach dem Aufbau jedes einzelnen Turmsegments jedes einzelne Mastelement in seiner Relativposition verändert werden dahingehend, dass das Mastelement in seine Position im Zentrum des Turmes verbracht werden kann.

Vorteilhaft ist, dass auch zunächst mehrere oder sämtliche Mastelemente eines Turms im eingeklappten Zustand zusammengebaut werden können und dann diese zusammengesetzten Mastelemente gleichzeitig in ihrer Relativposition verändert werden können, d. h. es wird in diesem Fall der zusammengesetzte Mast oder Mastteil in seiner Lage verändert.

Eine Hebeeinrichtung wie beispielsweise ein Kran greift hierbei an einem Mastelement an, hebt es hoch und setzt es in dem Bereich ab, wo es positioniert werden soll. Die gelenkige Anbindung an der Turmwand dient hierbei der Sicherung und Führung dieses Vorgangs.

Wie bereits erwähnt, erfolgen der Aufbau des Turmes und der Aufbau des Zahnstangenaufzugsmastes abschnittsweise. Mit dem Aufbaufortschritt des Turmes wächst auch der Aufbaufortschritt des Zahnstangenaufzugsmastes. Entsprechend wird das unterste Mastelement, also das Mastelement, das im untersten Abschnitt des Turmes vorhanden ist, auf einem entsprechend vorbereiteten Untergrund in dem Turm, anders ausgedrückt auf dessen Fußboden, aufgestellt. Erfindungsgemäß ist dort eine höhenverstellbare Plattform aufgebaut. Das unterste Mastelement wird auf dieser Plattform abgesetzt. Die Höhenverstellbarkeit der Plattform bringt es mit sich, dass das unterste Mastelement entsprechend angehoben oder abgesenkt werden kann. Das Anheben oder Absenken kann beispielsweise mit Hilfe eines Spindeltriebes, elektromotorisch, händisch, pneumatisch oder hydraulisch erfolgen.

Zugleich mit dem weiteren Aufbau des Turmes wird jeweils das nächste Mastelement auf das jeweils untere, also darunter befindliche, zuletzt aufgebaute Mastelement abgesetzt. Ein Mastelement wird folglich auf dem nächsten Mastelement aufgebaut und so wird der komplette Zahnstangenaufzugsmast nach und nach zugleich und gleichzeitig mit dem Aufbau des Turmes errichtet.

Die einzelnen Mastelemente werden durch das erfindungsgemäße Verfahren miteinander zu einem einzigen Zahnstangenaufzugsmast gefügt und zwar so, dass alle aneinander gereihten Antriebsprofilmodule eine durchgängige Verzahnung ergeben. Die Verstellbarkeit des Abstandes zum Untergrund mit der höhenverstellbaren Plattform ermöglicht das formschlüssige und spielfreie Aneinanderreihen der Verzahnungsabschnitte übereinander gestapelter und miteinander verbundener Mastelemente. Auch der Anschluss an Adapter oder das Verbinden größerer Mast-Teilstücke miteinander ist durch den Einsatz der höhenverstellbaren Plattform formschlüssig möglich, so dass auch dann eine durchgehende Verzahnung hergestellt wird.

Wie schon erwähnt, werden bevorzugt die einzelnen Mastelemente je Turmelement, vorliegend häufig als Turmabschnitt bezeichnet, vormontiert, entweder unmittelbar auf der Baustelle vor dem Zusammenbau von einzelnen Turmsegmenten zu einem Turmabschnitt, dem Ringsegment, oder besonders bevorzugt bereits bei der Herstellung der einzelnen Turmelemente bzw. Turmsegmente im Werk.

Wie ebenfalls vorstehend kurz erwähnt, werden die Mastelemente an der Turmwand über einen Haltebügel oder ein anderes gelenkig angeordnetes Halteelement fixiert und gelagert. Beim Aufbau des Turmes wiederum werden die einzelnen Turmelemente übereinander gesetzt und zu dem Turm miteinander verbunden und jedes Mastelement jedes Turmelements wird mit dem Mastelement des darunter befindlichen Turmelements verbunden und so nach und nach der Zahnstangenaufzugsmast aufgebaut.

Die vormontierten Mastelemente sind besonders bevorzugt während des Aufbaus des Turmes und gegebenenfalls auch beim Transport der einzelnen Elemente in ihrer Lage fixiert, beispielsweise über das Anbringen von Transportsicherungen, z. B. von Wandstreben, oder indem das Gelenk blockiert wird.

Das erfindungsgemäße Verfahren hat zahlreiche Vorteile.

Ein Vorteil ist, dass der Montageablauf sicher und effizient ist.

Ferner kann der im Aufbau befindliche Zahnstangenaufzug vom Aufbau des ersten Mastelements an uneingeschränkt genutzt werden. Sobald das erste Mastelement an seiner Position im Turm, also ungefähr mittig, aufgebaut worden ist, kann der Aufzug genutzt werden. Das ist ein enormer Vorteil. Da der Turm abschnittweise nach oben wächst und auf der Oberseite des zuletzt aufgebauten Turmabschnitts Verbindungsmittel für das nächste Turmsegment eingebaut werden müssen und natürlich auch das Positionieren überwacht werden muss, ist eine Montageplattform vorgesehen, die nach dem Fertigstellen jedes Abschnitts um einen Abschnitt nach oben verbracht wird mit Hilfe des Krans. Nun ist diese Montageplattform mit dem Aufzug in jedem Abschnitt anfahrbar.

Die höhenverstellbare Plattform ermöglicht einen Toleranzausgleich über große Höhen und auf eine definierbare Weise. Das Aufstellen der Seilaufzugsteile, sog. Gitterscheiben, erfolgt im Stand der Technik mit Hilfe des Krans. Der Kran hebt die aneinander befestigten Gitterscheiben als Ganzes hoch und schließt die ganze Einheit an den Adapter im Übergangsbereich vom Betonturmteil zum Stahlturmteil an, indem er das Ganze an den Adapter heranzieht. Korrekturen sind kaum möglich und in Abhängigkeit von den Fähigkeiten des Kranführers klappt dies besser oder schlechter. Ein Zahnstangenaufzugsmast könnte auf die herkömmliche Weise nicht errichtet werden, da eine durchgängige Verzahnung nicht herstellbar wäre.

Durch das Einstellen der Höhe mit Hilfe der höhenverstellbaren Plattform ist es dagegen möglich, so präzise ein Mastelement an das nächste anzuschließen bzw. die unter einem Adapter befindlichen Mastelemente an den Adapter anzuschließen, dass ein durchgängiges, zusammenhängendes und spielfreies Antriebsprofil erzeugt werden kann, auf dem das Antriebsritzel des Zahnstangenaufzugs störungsfrei und betriebssicher laufen kann.

In der besonders bevorzugten Ausführung, bei welcher die Plattform auch nach dem Aufbau, also nach Fertigstellen des Zahnstangenaufzugsmastes bzw. des gesamten Turms, unter dem Aufzug verbleibt, sind Längenänderungen der Profile durch auf den Turm einwirkende Hitze oder Kälte mittels der höhenverstellbaren Plattform auch später noch jederzeit korrigierbar. Windkraftanlagen sind auf eine Mindestbetriebszeit von 20 Jahren ausgelegt. Im Laufe der Zeit können sich Längenänderungen aufgrund von Umwelteinflüssen oder Untergrundänderungen ergeben. Mit der höhenverstellbaren Plattform ist eine erneute Justierung der Mastelemente möglich.

Durch die gelenkige Anordnung der Mastelemente am Turm sind Fixpunkte definiert, was Einfluss auf die Kräfteverteilung hat. Das gelenkige Anbringen hat überdies den Vorteil, dass es die Lebensdauer der Mastelemente verlängert. Setzungen des Turms, ein Schwanken des Turms durch Winddruck oder auch Schwankungen des Untergrundes sowie temperaturbedingte Ausdehnungen in unterschiedlichem Grade von verschiedenen, aufeinandertreffenden Materialien werden ausgeglichen. Es ist eine gewisse Nachgiebigkeit vorhanden, bei gleichzeitiger seitlicher Stabilisierung der Mastelemente. Schließlich sind die Mastelemente vor Herabfallen gesichert, sollte es zu einer Katastrophe kommen; sie hängen am Turm fest.

Es sind mehrere Varianten vorgesehen. Zum einen ist vorgesehen, dass der komplette Zahnstangenaufzugsmast auf der höhenverstellbaren Plattform aufgestellt wird, dort zusammengebaut wird und dort auch stehen bleibt. Anders ausgedrückt, der Zahnstangenaufzugsmast steht auf dem Boden des Turmes, der beispielsweise als Kellerdecke ausgeführt sein kann. Sollte eine Höhenanpassung des Zahnstangenaufzugsmastes im Laufe der Zeit notwendig werden, wie schon zuvor beschrieben, so ist dies jederzeit dank der vorhandenen höhenverstellbaren Plattform möglich.

In einer weiteren bevorzugten Variante ist mit Hilfe der Plattform nicht nur die Höhe einstellbar, also eine Verstellbarkeit der Plattform in einer vertikalen Richtung, entlang der Längsachse des Turms, lotrecht zum Untergrund, gegeben, sondern es ist auch eine Neigung des Zahnstangenaufzugsmastes korrigierbar, indem eine Verstellbarkeit auch in seitlicher Richtung vorgesehen ist. Hierdurch lassen sich im Bedarfsfall Senkungen des Untergrundes oder möglicherwiese sich aufsummierende Fehler beim Aufbau, sodass es zu einem geneigten, nicht lotrecht aufgebauten Zahnstangenaufzugsmast kommt, ausgleichen. Hierzu ist beispielsweise die Plattform mit einem Tripoden oder Hexapoden ausgestattet. In einer alternativen Ausführung werden zwei höhenverstellbare Plattformen vorgesehen, unter jedem Führungsholm eine höhenverstellbare Plattform - durch unterschiedliche Höhenverstellung lassen sich bis zu einem gewissen Grade seitliche Neigungen ausgleichen.

Gemäß einer anderen Variante der Erfindung wird der Zahnstangenaufzugsmast nicht auf dem Untergrund des Turmes abgestellt, sondern wird irgendwo am Turm aufgehängt. Beispielsweise wird der Zahnstangenaufzugsmast aufgehängt an einem Verbindungsglied zwischen den beiden Turmteilen mit unterschiedlichen Materialien eines Hybridturmes, d. h. also beispielsweise am Übergang vom Betonturm zum Stahlturm. Dort wird im Stand der Technik üblicherweise eine Plattform, auch als Zwischenplattform bezeichnet, mit einem Verbindungselement, häufig auch als Adapter bezeichnet, eingebaut. Wie schon erwähnt ist zum Beispiel an der Plattform die Verspanneinrichtung für den Betonturmteil befestigt. Der Adapter dient im Stand der Technik dem Anschluss der Führungsteile des Seilaufzugs.

Entsprechend ist vorliegend vorgesehen, den Zahnstangenaufzugsmast an dieser Zwischenplattform aufzuhängen. Dies hat zur Folge, dass der unter der Zwischenplattform befindliche Teil des Zahnstangenaufzugsmastes herabhängt und der darüber befindliche Teil darauf steht. Die für den Aufbau des Zahnstangenaufzugsmastes erfindungsgemäß vorgesehene höhenverstellbare Plattform kann bei einer solchen Anordnung des Zahnstangenaufzugsmastes nach dem Aufbau entnommen werden.

Der Zahnstangenaufzugsmast kann alternativ auch unmittelbar an der Turmwand aufgehängt werden, beispielsweise über mehrere horizontale Seilabspannungen. In einem besonders hohen Turm ist dies von Vorteil, ohne dass eine separate Plattform oder ein separater Adapter vorgesehen sein müsste.

In einer noch alternativen und besonders bevorzugten Ausführungsform wird bei einem vorstehend beschriebenen, auf ungefähr halber Höhe aufgehängten Zahnstangenaufzugsmast die höhenverstellbare Plattform nicht nach dem Aufbau des Mastes entnommen, sondern sie verbleibt. Dies bringt den Vorteil mit sich, dass gegebenenfalls auch später noch Höhenangleichungen, also einem Anpassen der Distanz des unteren Endes des Zahnstangenaufzugsmastes bzw. des untersten Mastelementes zum Untergrund wie dem Turmboden hin, durchgeführt werden können. Wie schon angesprochen, können z. B. Untergrundsetzungen mit Hilfe der höhenverstellbaren Plattform korrigiert werden. Ebenso ist es damit einfach möglich, ein beschädigtes Mastelement auszutauschen. Mit Hilfe der höhenverstellbaren Plattform kann der Zahnstangenaufzugsmast angehoben, die Verbindungen der Mastelemente untereinander an der entsprechenden Stelle gelöst, der Rest abgelassen und so das Mastelement ausgetauscht und anschließend alles wieder zusammengeschoben werden. Infolgedessen ist es von Vorteil, wenn die höhenverstellbare Plattform auch nach dem Aufbau und nach Abschluss der Aufbauarbeiten verbleibt.

Gemäß noch einer weiteren Ausführungsform werden die Mastelemente zunächst miteinander verbunden, in der vormontierten Stellung, d. h. nahe zur Wand, und werden anschließend gemeinsam mit dem Kran hochgehoben und auf die Plattform gestellt. Mit Hilfe der Plattform kann dann dieser Teil-Mast angehoben und feinjustiert werden zum Anschluss an ein Verbindungsglied wie einem Adapter, oder zum Anschluss an den darüber befindlichen Teil-Mast.

Wie schon zuvor erwähnt, sind mehrere Varianten des Ablaufs möglich.

Es wird für das nachfolgende Beispiel von folgender Aufbausituation ausgegangen: Beton-/Stahl-Hybridturm; Mastelemente, nachfolgend auch Leiterteile genannt, also Führungsprofil(e) und Antriebsprofil, hängend im Betonturm; Last kann in die Übergabeplattform zwischen Beton und Stahl eingebracht werden.

Eine bevorzugte Lösung eines Verfahrens zum Errichten eines Zahnstangenaufzugsmastes wird nachfolgend erläutert:
1. Mastelemente sind drehbar an Aufnahmen im Betonturm befestigt - sie werden stehend montiert. Unter dem ersten Leiterelement wird die erfindungsgemäße Hebevorrichtung, also die höhenverstellbare Plattform, eingebaut, auf der das Mastelement steht und mit der das Mastelement bzw. der Leiterturm angehoben werden kann.
2. Teil um Teil werden die nächsten Mastteile (also die Führungen und die Zahnstange für den Aufzug) mit den Betonringen aufeinandergesetzt, wobei die Leiterelemente satt auf die darunter liegenden einrasten und formschlüssig miteinander befestigt werden. Sollte es auf Grund von Toleranzen nicht passen, können die darunter liegenden Leiterteile mit der Hebevorrichtung angehoben oder abgesenkt werden.
3. Der Aufzug kann in dieser Situation schon auf dem Teil-Aufzugsmast, also den schon aufgebauten Leiterteilen, verfahren, da sie effektiv in ihrer finalen Lage verbaut werden.
4. Der Betonturm wird abgeschlossen und die vertikalen Seile verspannen die Betonringe miteinander.
5. In der Übergabeplattform zwischen Betonturm und Stahlturm wird eine starre Aufnahme eingebaut, die die gleichen Führungsprofile und die gleiche Zahnstange enthalten, wie die normalen Mastelemente. Diese Aufnahme könnte aber auch an einem losgelösten Träger etc. befestigt sein, wenn die Plattform nicht belastet werden soll oder fehlt.
6. Die Mastelemente werden alle auf einmal mit der Hebevorrichtung, also mit der höhenverstellbaren Plattform, angehoben oder abgesenkt, bis sie von unten bündig an den Profilen der Aufnahme anliegen, und werden miteinander verbunden.
7. Somit ist der Übergang vom unteren Leiternstrang zur Aufnahme spielfrei und formschlüssig.
8. Jetzt kommt die erste Stahlröhre auf den Betonturm. In der Stahlröhre sind alle Innenausbauten samt Mastelement des Aufzugs verbaut. Die Toleranzen des Stahlturms weichen unter Umständen stark von den Toleranzen der Mastelemente bzw. des Aufzugsmastes ab.
9. Die Halterungen, wie z. B. Haltebügel, der Mastelemente im Stahlturm sind nur für den Transport fix; sie sind für den späteren Betrieb drehbar bzw. flexibel gelagert. Es können Bolzen in den Halterungen oder zusätzliche Arretierungen bzw. Transportsicherungen entnommen werden, wenn der Stahlturm auf dem Betonturm platziert und ausgerichtet ist. Das kann aber erst erfolgen, wenn das aufzusetzende Mastelement im Stahlturm mit einer Hebeeinrichtung (z. B. Kran) abgefangen und entlastet wird. Nach dem Entfernen der Arretierungen kann das Mastelement langsam auf die fixe Aufnahme an der Übergabeplattform abgelassen werden, bis beide bündig anliegen und miteinander verbunden sind.
10.Beim nächsten Stahlturmteil wird das Prozedere von 9. wiederholt, bis das Mastelement auf dem darunter Liegenden satt aufliegt. Die Hebeeinrichtung, z. B. der baustellenseitig vorhandene Kran oder anderes Hebezeug, wie z. B. ein Kettenzug, muss dann aber nicht auf der Plattform zwischen Betonturm und Stahlturm aufliegen, sondern der Abschlussplattform der Stahlröhren, oder dem darunterliegenden Leiterturm (wenn die Last für die Plattform zu hoch ist).

Im Weiteren wird eine Alternative zum Vorstehenden beschrieben:
1. Mastelemente sind drehbar an Aufnahmen im Betonturm befestigt und hängen nach unten. Folglich sind die Leiter-/Masthalterungen sind noch nicht in ihrer finalen, horizontalen Position.
2. Teil um Teil werden die nächsten Mastelemente (also die Führungen und das Antriebsprofil des Aufzugs) mit den Betonringen aufeinandergesetzt, wobei die Leiterelemente satt auf die darunter liegenden einrasten und formschlüssig miteinander befestigt werden. Die Mastelemente verbleiben anschließend in der Transportlage, also im eingeklappten Zustand.
3. Anders als in der vorstehenden Ausführung kann der Aufzug in dieser Situation noch nicht auf den Mastelementen verfahren, da sie noch zu nahe an den Betonringen anliegen.
4. Der Betonturm wird abgeschlossen und wie üblich verspannen die vertikalen Seile die Betonringe miteinander.
5. In der Übergabeplattform zwischen Betonturm und Stahlturm wird eine in vertikaler Richtung verstellbare oder starre Aufnahme eingebaut, die die gleichen Führungsprofile und die gleiche Zahnstange enthalten, wie die "normalen" Mastelemente. In noch einer Alternative könnte diese Aufnahme aber auch an einem losgelösten Träger etc. befestigt sein, wenn die Plattform nicht belastet werden soll oder fehlt.
6. Die zusammengebauten Leiterteile, also der untere Teil-Mast, werden alle auf einmal mit dem Kran angehoben, bis sie von unten bündig an den Leiterprofilen der Aufnahme anliegen und miteinander verbunden werden. Die Anpassung, insbesondere die Feinjustierung, der Höhe des Teil-Masts beim Anschluss an die Aufnahme, erfolgt mit Hilfe der höhenverstellbaren Plattform.
7. Somit ist der Übergang vom unteren Leiterstrang zur Aufnahme spielfrei und formschlüssig.
8. Jetzt kommt die erste Stahlröhre auf den Betonturm. In der Stahlröhre sind alle Innenausbauten samt Mastelementen des Aufzugs fest verbaut. Die Toleranzen des Stahlturms weichen unter Umständen stark von den Toleranzen des Leiterturms ab, wie schon zuvor erläutert.
9. Nun gibt es zwei denkbare Ansätze:
   a. Die Aufnahmen/Halterungen der Mastelemente im Stahlturm sind starr, also nicht veränderlich, und die Aufnahme in der Übergabeplattform ist in vertikaler Richtung verstellbar. So kann die Aufnahme samt daran hängendem Teil-Mast mittels der Hebevorrichtung, also der höhenverstellbaren Plattform, nach oben, zum darüber liegenden Leiterturm, also entweder dem kompletten Teil-Mast des Stahlturms oder zum nächsten Mastelement des nächsten Stahlelementes, angehoben werden, bis beides bündig abschließt.
   b. Die Halterungen der Leitern im Stahlturm sind nur für den Transport fixiert und sind für den späteren Betrieb drehbar/flexibel gelagert. Bolzen oder Ähnliches in den Halterungen oder zusätzliche Arretierungen oder Transportsicherungen können entnommen werden, wenn der Stahlturm bzw. das Stahlelement auf dem Betonturm bzw. dem darunter liegenden Stahlelement platziert und ausgerichtet ist. Das kann aber erst erfolgen, wenn der Leiterturm im Stahlturm mit einer Hebeeinrichtung (Kran) abgefangen und entlastet wird. Nach dem Entfernen der Arretierungen kann das Mastelement oder der obere Teil-Mast langsam auf die Aufnahme an der Übergabeplattform abgelassen werden, bis beide bündig anliegen und miteinander verbunden sind. Die Aufnahme kann bei dieser Ausführung starr sein oder vertikal verstellbar sein.
10.Wenn noch ein weiteres Stahlelement aufgesetzt werden muss, so müssen beim nächsten Stahlelement die Halterungen der Mastelemente gelockert werden, um eine bündige Auflage mit dem darunterliegenden, schon zusammengesetzten Mast-Teilturm zu erreichen.

Das Vorsehen einer höhenverstellbaren Plattform hat folglich bei jeder Aufbauvariante zahlreiche Vorteile.

Beim Aufbau kann stets der bereits aufgebaute Zahnstangenaufzugsmast-Teil an den neu anzubauenden herangeführt bzw. davon entfernt werden, je nach Notwendigkeit. Dies ist feinfühlig möglich, und es können so auch kleinste Differenzen überwunden werden. Das genaue Anpassen der Höhe bedingt, dass die aufeinanderfolgenden Antriebsprofile, die jeweils die Zahnstange umfassen, exakt und spielfrei aneinander angeschlossen werden können. Der errichtete Zahnstangenaufzugsmast hat damit eine durchgehende Zahnstange, an dem das Ritzel störungsfrei und betriebssicher verfahren werden kann. Durch den formschlüssigen Anschluss wird eine starre Zahnstange über die gesamte Höhe des Zahnstangenaufzugsmasts hergestellt, die auch bei starken Turmneigungen nicht beschädigt wird und auch dann sicher befahren werden kann.

Der Aufbau des Zahnstangenaufzugsmastes wird wesentlich erleichtert. Es kann der schon errichtete Teil-Mast an das neu aufzusetzende Mastelement herangehoben oder erforderlichenfalls auch abgesenkt werden, und dies im Millimeterbereich. Kranzeiten werden dadurch eingespart, da der Anschluss neuer Mastelemente schnell durchgeführt werden kann. Es ist dabei irrelevant, ob das Mastelemente unten im Turm oder schon ganz oben im Turm einzusetzen ist. Da die einzelnen Mastelemente spielfrei zusammengebaut worden sind mit Hilfe der höhenverstellbaren Plattform entsteht ein starrer Leiterturm, der mit der Plattform wieder hochgehoben oder abgesenkt werden kann, unabhängig von der Gesamthöhe.

Im Falle der Notwendigkeit von Reparaturen oder dem Austausch von Mastelementen erweist sich die höhenverstellbare Plattform ebenfalls als sehr nützlich, wie schon erläutert.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
- Figur 1: eine schematische Darstellung des Aufbaus eines ersten Zahnstangenaufzugsmastes;
- Figur 2: eine schematische Darstellung des Aufbaus eines zweiten Zahnstangenaufzugsmastes;
- Figur 3: ein einzelnes Mastelement in verschiedenen Zuständen in perspektivischer Darstellung;
- Figur 4: ein Detail des Mastelementes der Figur 3;
- Figur 5: das Mastelement der Figuren 3 und 4 in Vorderansicht;
- Figur 6: das Mastelement der Figuren 3 bis 5 in Seitenansicht;
- Figur 7: jeweils in vereinfachter Darstellung Seitenansicht und perspektivische Ansicht des Zusammenbaus eines Zahnstangenaufzugsmastteils und dessen Anschluss an einen Adapter; und
- Figur 8: Details im Bereich der höhenverstellbaren Plattform.

### Figurenbeschreibung

Es sei vorab angemerkt, dass die Figurenbeschreibung überwiegend figurenübergreifend erfolgt.

Bei den Schnittansichten ist jeweils nur ein Teil des Turmes gezeigt - entsprechend ist nur eine Turmwand gezeigt.

Die Erfindung bezieht sich auf das Errichten eines Zahnstangenaufzugsmastes für den Betrieb eines Zahnstangenaufzugs. In den Figuren sind entsprechend vom Zahnstangenaufzug nur der Zahnstangenaufzugsmast und der Fahrkorb mit dem Fahrschlitten, der über ein nicht dargestelltes Ritzel an der Verzahnung am Zahnstangenaufzugsmast verfährt, dargestellt.

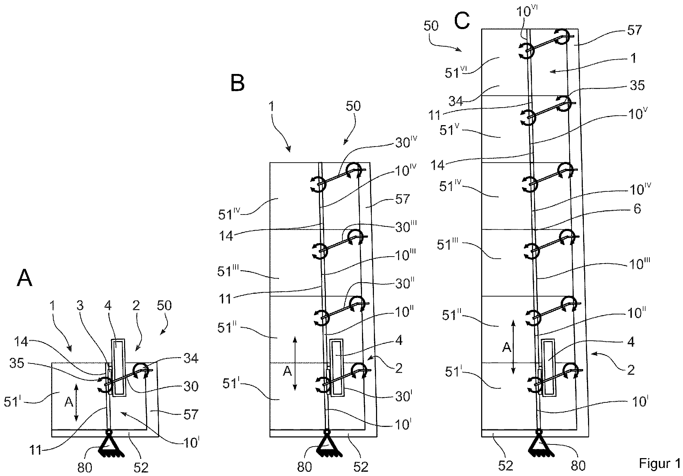

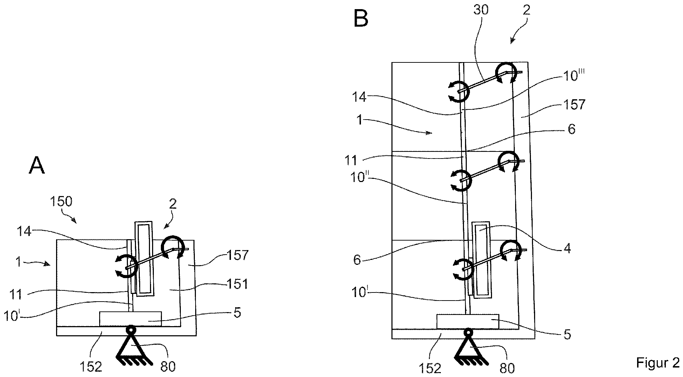

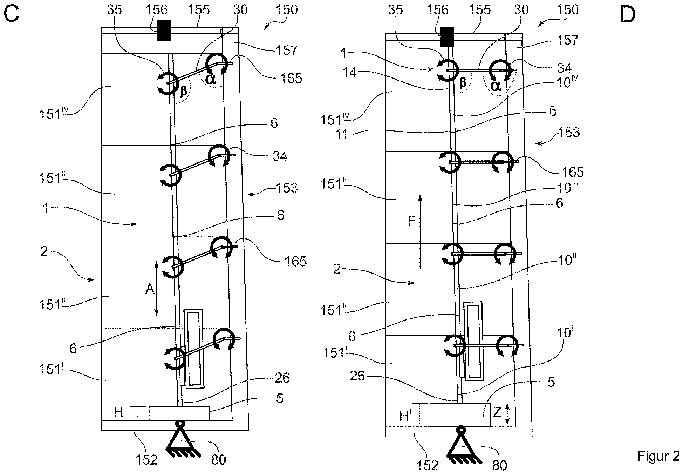

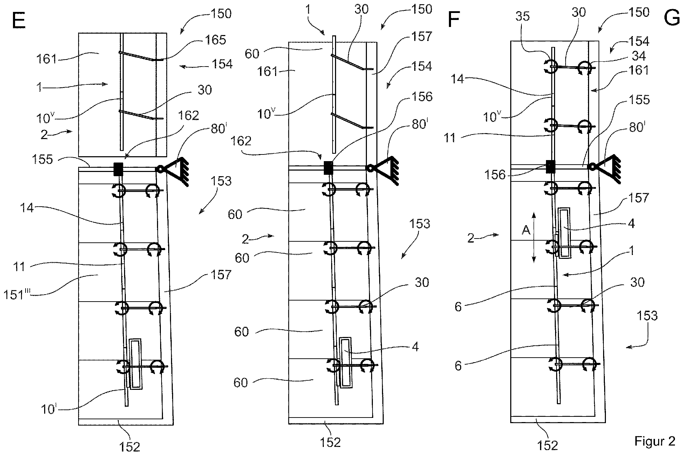

In den Figuren 1A, 1B und 1C ist sehr schematisch der erfindungsgemäße Aufbau eines Zahnstangenaufzugsmastes 1 gezeigt. Zunächst wird ein erstes Mastelement 10, hier mit 10^{I} bezeichnet, auf dem Turmboden 52 aufgestellt (vgl. Figur 1A). Hierzu ist eine in der schematischen Darstellung der Figur 1 nicht dargestellte höhenverstellbare Plattform auf den Turmboden 52 aufgestellt (vgl. Figs. 2 und 7-8).

Das Mastelement 10^{I} wird mit einem gewissen Abstand zu der Turmwand 57 aufgebaut, sodass der Fahrschlitten 3 des Aufzugs 2 und mit ihm der Fahrkorb 4 an dem Zahnstangenaufzugsmast 1 ungehindert fahren kann.

In der einfachsten Ausführung ist der Zahnstangenaufzugsmast 1 aus einem einzelnen Führungsprofil 11, an dem eine Verzahnung (in Fig. 1 nicht gezeigt) vorhanden ist, aufgebaut. Das Führungsprofil 11 ist somit zugleich auch Antriebsprofil 14. Hierfür kann die Verzahnung integraler Bestandteil des Führungsprofils sein. Es kann aber auch eine Zahnstange mit dem Führungsprofil fest verbunden wie z. B. vernietet oder verschweißt sein. Jedes Mastelement 10 ist dann ein Teilstück des Führungsprofils 11 mit Verzahnung und somit zugleich ein Teil des Antriebsprofils 14.

Es ist ein, in Figur 1 nur stark schematisch dargestellter Haltebügel 30 vorhanden, der auf der einen Seite in der Turmwand 57 und auf der anderen Seite am Mastelement 10 gelenkig befestigt ist. Die Beweglichkeit ist angedeutet durch die Doppelpfeile - gelenkige Turmwandhalterung 34 und gelenkige Mastelementhalterung 35.

Das Errichten und damit das Zusammenbauen des Zahnstangenaufzugsmastes 1 erfolgt abschnittsweise, genauer mit dem Aufbau jedes einzelnen Turmabschnitts 51 wird zugleich ein Mastelement 10 aufgebaut. Entsprechend wird mit Aufbau des Turmabschnitts 51^{I} das erste Mastelement 10^{I} auf dem Turmboden 52, genauer dort auf die höhenverstellbare Plattform, aufgebaut. Mit Aufsetzen und Anschließen des nächsten Turmabschnitts 51^{II} wird das zweite Mastelement 10^{II} aufgesetzt und an das zuvor Errichtete angeschlossen. Darauf wiederum wird das dritte Mastelement 10^{III} und entsprechend darüber wieder das vierte, fünfte und sechste Mastelement 10^{IV}, 10^{V} bzw. 10^{VI} aufgesetzt, usw., bis der Zahnstangenaufzugsmast 1 seine endgültige Höhe erreicht hat.

Die Verbindung 6 zwischen den einzelnen Mastelementen 10 erfolgt formschlüssig und übergangsfrei, um einen starren Zahnstangenantriebsmast 1 mit einem durchgehenden Antriebsprofil bereitzustellen.

Wie zuvor erläutert und wie in den Figuren 1A bis 1C gut zu erkennen ist, wächst der Turm 50 abschnittsweise bzw. elementeweise in die Höhe und mit ihm der Zahnstangenaufzugsmast 1. Von großem Vorteil ist, dass nach dem Errichten des ersten Mastelementes 10^{I} der Aufzug 2 betriebsbereit ist und genutzt werden kann und darf, wie angedeutet durch den Doppelpfeil A.

Die Kraftaufnahme 80 des Zahnstangenaufzugsmastes 1 befindet sich im Untergrund, d. h. der Zahnstangenaufzugsmast 1 steht auf dem Turmboden 52, wobei die in Figur 1 nicht dargestellte höhenverstellbare Plattform zwischengeschaltet ist.

Eine seitliche Absicherung erfolgt über die Haltebügel 30. Es sind typischerweise zwei Haltebügel 30 pro Mastelement 10 und damit pro Turmabschnitt 51, auch Turmelement 60 genannt, vorgesehen. Die Haltebügel 30 sind in der Turmwand 57 befestigt, insbesondere verschraubt. Die Haltebügel 30 sind gelenkig an der Turmwand 57 angebracht. Es sind entsprechend eine gelenkige Turmwandhalterung 34 und eine gelenkige Mastelementhalterung 35 pro Haltebügel 30 vorhanden.

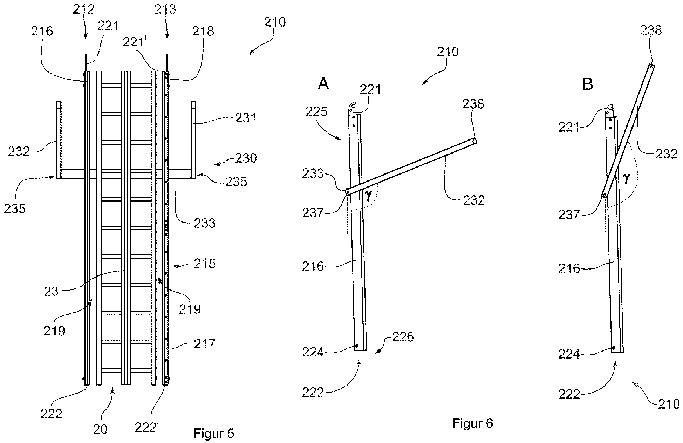

Die gelenkige Lagerung des Mastelementes in der Turmwand bzw. an der Turmwand hat den Vorteil, dass jeder Turmabschnitt 51 mit dem bzw. den in der Turmwand 57 vormontiertem/n Mastelement/en 10, einschließlich Haltebügel/n 30, im Werk vorgefertigt werden kann. Hierzu werden die einzelnen Mastelemente 10, d. h. ein Mastelement 10 pro Turmabschnitt 51, über den mindestens einen Haltebügel 30 pro Mastelement 10 an der Turmwand 57 fixiert und dort zum Transport zur Baustelle und für den grundsätzlichen Aufbau gesichert. Das Mastelement 10 ist hierfür in Richtung zur Turmwand hin eingeklappt, wie später noch erläutert werden wird (vgl. Figur 6).

In den Figuren 2A bis 2G sind ein Zahnstangenaufzugsmastaufbau und damit der Aufbau eines Turmes schematisch dargestellt. Der Turm 150 der Figur 2 ist ein sogenannter Hybridturm, wie er beispielsweise in Windkraftanlagen häufig zum Einsatz kommt. Er besteht aus einem ersten Turm-Teil 153 (Aufbau - siehe Figuren 2A bis 2D) und einem zweiten Turm-Teil 154, der auf dem ersten Turm-Teil 153 aufgesetzt ist (vgl. Figuren 2E bis 2G), wobei beide Turm-Teile wiederum aus einzelnen Turmelementen zusammengesetzt sind.

Der Aufbau des Hybridturms 150 erfolgt vom Prinzip her genauso wie der Aufbau des Turmes 50, der anhand der Figuren 1 beschrieben worden ist, jedenfalls in Bezug auf den Turm-Teil 153. Der erste Turm-Teil 153 ist vom zweiten Turm-Teil 154 durch eine Zwischenplattform 155 getrennt. Bis zum Erreichen der Plattform 155 erfolgt der Aufbau des Zahnstangenaufzugsmastes 1 wie anhand der Figur 1 erläutert. Die Figuren 2A bis 2C sind folglich mit den Figuren 1A bis 1C vergleichbar.

In Figur 2D erreicht der im Aufbau begriffene Zahnstangenaufzugsmast 1 die Zwischenplattform 155 des Turms 150 - der Zahnstangenaufzugsmast 1 besteht an dieser Stelle im vorliegenden Beispiel aus vier Mastelementen 10^{I}, 10^{II}, 10^{III}, 10^{IV} und entsprechend der Turm 150 aus vier Turmabschnitten 151^{I}, 151^{II}, 151^{III}, 151^{IV}.

Um an das Verbindungsglied 162, hier den Adapter 156, angeschlossen zu werden, wird der bereits aufgebaute Teil des Zahnstangenaufzugsmastes 1 mit der höhenverstellbaren Plattform 5 angehoben, wie in Figur 2D durch den Pfeil F dargestellt.

Die Höhenverstellbarkeit der höhenverstellbaren Plattform 5 ist durch den Doppelpfeil Z dargestellt (vgl. Figur 2D). Mit Hilfe der höhenverstellbaren Plattform 5 wird der Teil des Zahnstangenaufzugsmasts 1, der bis dahin aufgebaut worden ist, im ersten Turm-Teil 153 so weit hochgedrückt, dass der Zahnstangenaufzugsmast 1 an den Adapter 156 angeschlossen und mit diesem fest verbunden werden kann. Entsprechend verändert sich der Abstand bzw. die Distanz H, H^{I}, auch als "Höhe" des Mastelementes 10 bezeichnet, den bzw. die das untere Ende 26 des Mastelementes 10^{I} zum Turmboden 152 aufweist - vgl. Figs. 2C und 2D.

Das Verbindungsglied 162, also der Adapter 156, enthält folglich ebenfalls Führungsprofil und Antriebsprofil, um das Führungsprofil 11 und das Antriebsprofil 14 eines Mastelementes 10 anschließen zu können.

Aus einem Vergleich der Figuren 2C und 2D ist die Gelenkigkeit der seitlichen Sicherung des Zahnstangenaufzugsmastes 1 gut zu erkennen. In Figur 2C, d. h. in dem Zustand, in dem der Zahnstangenaufzugsmast 1 auf dem Turmboden 152, genauer auf der höhenverstellbaren Plattform 5 steht, nimmt der Haltebügel 30 einen anderen Winkel α, β im Verhältnis zur Turmwand 157 und zum Mastelement 10 ein als im hochgedrückten Zustand der Figur 2D.

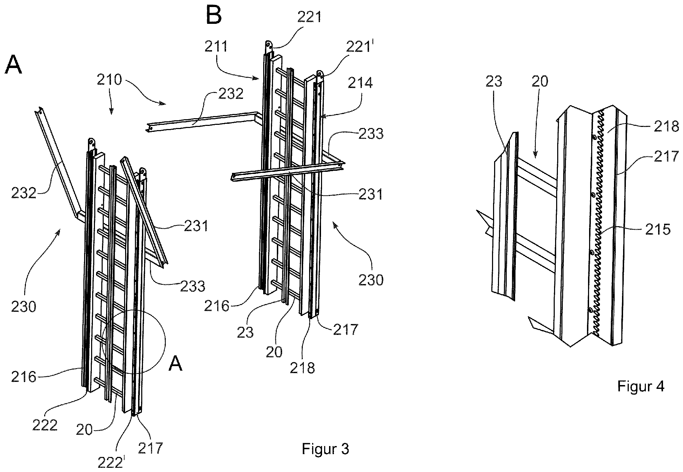

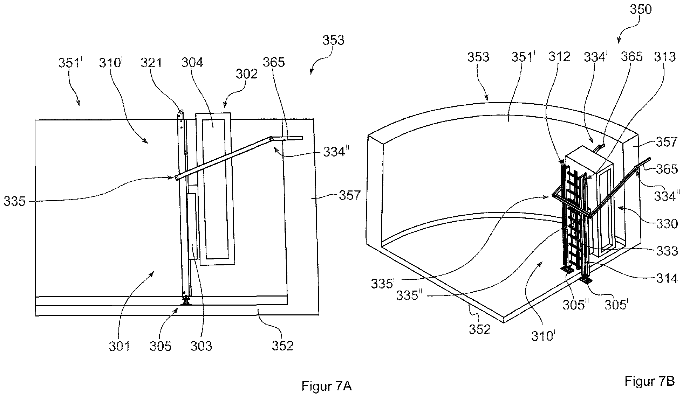

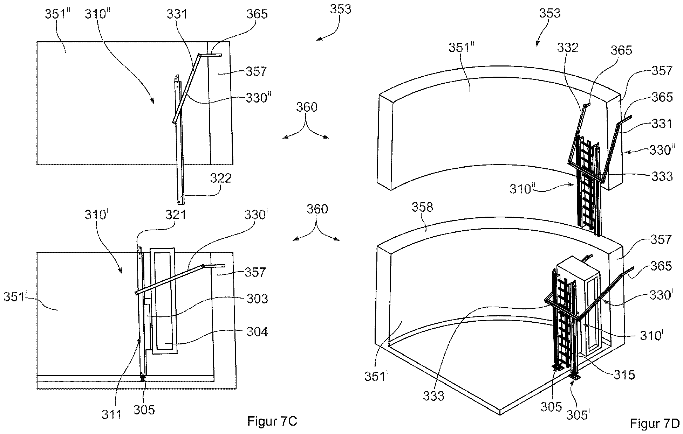

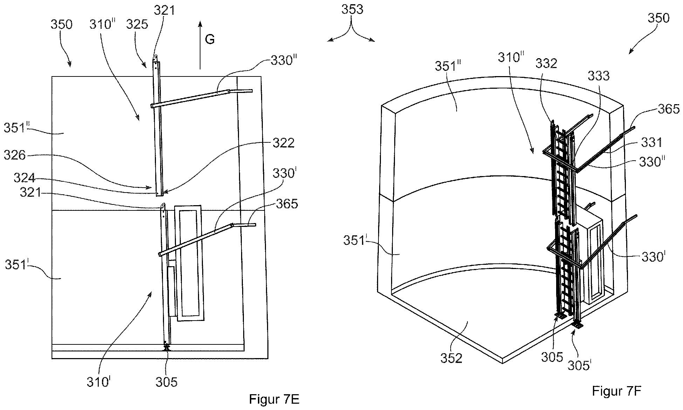

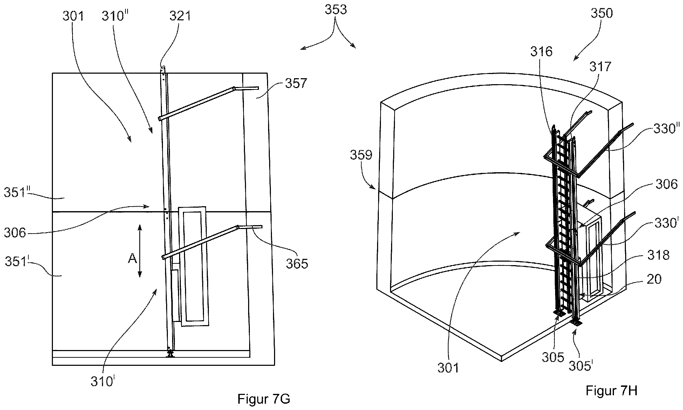

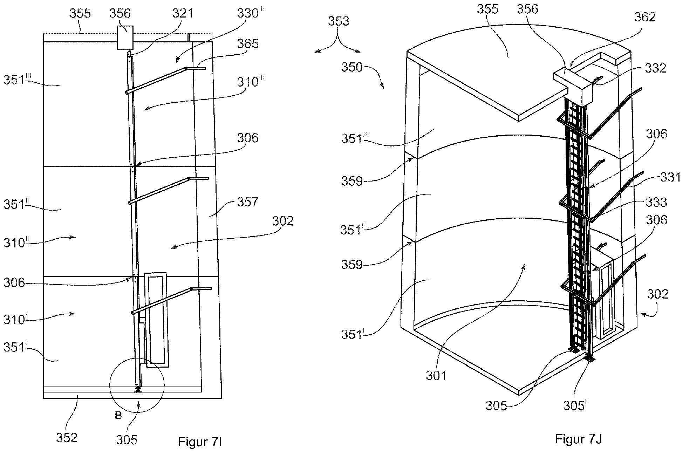

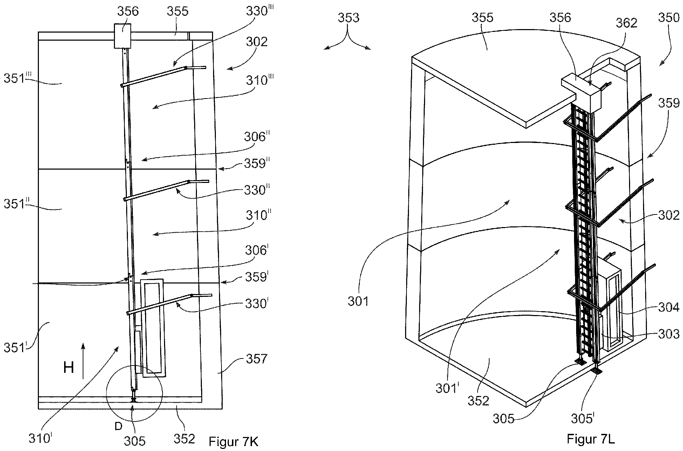

In Figur 2D ist der Haltebügel 30 jedes Turmabschnittes 151 und damit jedes Mastelementes 10 ungefähr in einem ausgestreckten Zustand, d. h. das Gelenk an der gelenkigen Turmwandhalterung 34 bedingt einen gestreckten Winkel, ca. ein 180-Grad-Winkel, zwischen dem in der Turmwand 157 eingebrachten Verankerungsmittel 165 (vgl. auch Bezugszeichen 365 in Figs. 7) und dem Halteteil (vgl. Bezugszeichen 231, 232 in Figs. 3-6) und das Gelenk der gelenkigen Mastelementhalterung 35 bedingt ungefähr einen 90-Grad-Winkel zwischen der Längserstreckung des Mastelementes bzw. zwischen Führungsholm und dem Halteteil. Anders in Figur 2C; hier sind die beiden genannten Winkel α und β jeweils abweichend vom Lot bzw. von 180 Grad; in der dargestellten Ausführung ist α ein spitzer Winkel und β ein stumpfer Winkel. Nachdem der Zahnstangenaufzugsmast 1 hochgedrückt und an das Verbindungsglied 162 in Form des Adapters 156 der Zwischenplattform 155 angeschlossen worden ist, kann die höhenverstellbare Plattform 5 entnommen werden, wie in den Figuren 2E bis 2G dargestellt.

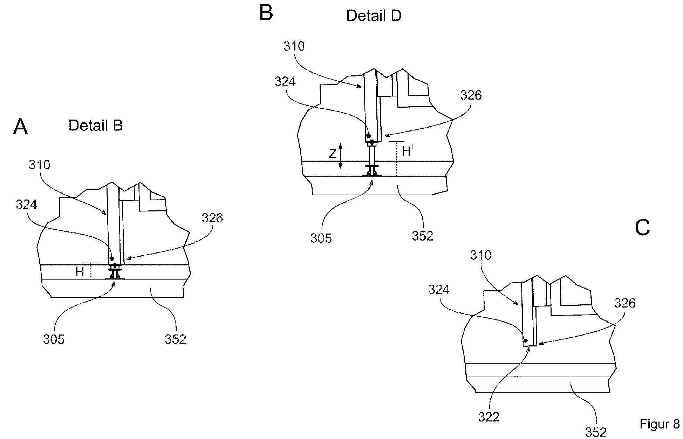

Es sei angemerkt, dass nach einer alternativen Ausführungsform, die überdies besonders vorteilhaft ist, die höhenverstellbare Plattform 5 an Ort und Stelle verbleibt und so im Bedarfsfall zum Nachjustieren der Höhe des Zahnstangenaufzugsmastes 1 oder bei Instandhaltungs- und Reparaturarbeiten eingesetzt werden kann - vgl. Fig. 8.

Nach Erreichen der Zwischenplattform und dem Anschluss des bis dahin errichteten Mastes an den Adapter wird der Turm weiter aufgebaut - siehe Figuren 2E bis 2G.

Hierfür wird ein weiteres Turmelement, der Turmabschnitt 161, des zweiten Turm-Teils 154 auf die Zwischenplattform 155 aufgesetzt. Im Inneren des Turmabschnittes 161 ist bereits ein weiteres Mastelement 10^{V} vormontiert. Dieses ist wie die Mastelemente 10^{I}, 10^{II}, 10^{III}, 10^{IV} im ersten Turm-Teil 153 über Haltebügel 30 mittels entsprechender Verankerungsmittel 165 an der Turmwand 157 befestigt.

Unterschieden wird in den Figuren 2E, 2F und 2G zwischen einem gesicherten und einem ungesicherten Zustand der Haltebügel 30 und damit des Mastelementes 10^{V}. In den Figuren 2E und 2F ist das Mastelement 10^{V} an der Turmwand 157 gesichert. In Figur 2G sind die Haltebügel 30 entsichert und damit eine gelenkige Anbindung hergestellt, wie angedeutet durch die Doppelpfeile 34, 35.

Nach dem Absetzen des Turmabschnittes 161 und dem Verbinden desselben mit dem unteren, ersten Turm-Teil 153 werden die bis dato gesicherten Haltebügel 30 entsichert, sodass das Mastelement 10^{V} auf den Adapter 156 abgelassen und mit diesem formschlüssig verbunden werden kann.

Nun kann der nächste Turmabschnitt 161 aufgesetzt und so der Turmaufbau und damit der Zahnstangenaufzugsmastaufbau fortgesetzt und schließlich, nach Erreichen der Endhöhe, abgeschlossen werden.

Nach dem Anheben und Anschließen des Zahnstangenaufzugsmastes 1 an den Adapter 156 (vgl. Figur 2D) befindet sich die Kraftaufnahme 80 nicht mehr im Turmboden 152 bzw. im Untergrund, auf dem der Turm 150 steht, sondern in der Turmwand 157, genauer im Bereich der Zwischenplattform 155 bzw. in jener selbst. Anders ausgedrückt, der Aufzug 2 hängt folglich über den Adapter 156 an der Zwischenplattform 155 und damit an der Turmwand 157 - wie angedeutet in den Figuren 2E-2G durch die Kraftaufnahme 80^{I}. Der darüber befindliche Rest des Zahnstangenaufzugsmastes 1, d. h. der im zweiten Turm-Teil 154 befindliche Teil desselben, steht auf dem unteren Teil und damit auf der Zwischenplattform 155.

In Figur 3 ist ein einzelnes Mastelement 210 zwar immer noch vereinfacht, aber doch detaillierter dargestellt; das Detail A aus Figur 3A ist in Figur 4 herausgezeichnet. In den Figuren 5 und 6 ist dasselbe Mastelement 210 in Seitenansicht bzw. in Vorderansicht gezeigt.

Ein Zahnstangenaufzugsmast 1 besteht, wie bereits schematisch anhand der Figuren 1 und 2 erläutert, aus einer Anzahl an einzelnen Mastelementen 210. Der Zahnstangenaufzugsmast 1 selbst weist zumindest ein Führungsprofil 211 mit Führungsfläche 219 zum Führen des Fahrschlittens 3 (vgl. Fig. 1) und ein Antriebsprofil 214 mit einer Verzahnung 215, insbesondere eine Zahnstange, auf. In die Verzahnung 215 der Zahnstange greift das nicht dargestellte Ritzel des Zahnstangenaufzugs 2 ein.

Der Zahnstangenaufzugsmast 1 ist aus einzelnen Mastelementen 210 zusammengesetzt. Jedes Mastelement 210 weist ein Stück des Führungsprofils 211 und ein Stück des Antriebsprofils 214 auf, vorliegend in Form eines Führungsprofilmoduls 216 und eines Antriebsprofilmoduls 217. Ein einziges Führungsprofil 211 und ein einziges Antriebsprofil 214, wobei diese beiden Profile einstückig ausgebildet sein können, sind die Mindestanforderungen an die Zusammensetzung eines Zahnstangenaufzugsmastes 1.

Bevorzugt sind zwei Führungsprofile 211 vorhanden, als erster Führungsholm 212 und zweiter Führungsholm 213 bezeichnet; entsprechend weist jedes Mastelement 210 ein erstes Führungsprofilmodul 216 und ein zweites Führungsprofilmodul 217 auf. Am Führungsholm 213 ist die Verzahnung 215 vorgesehen - Antriebsprofil 214 und zweites Führungsprofil 211 sind im Führungsholm 213 eine Einheit.

Die beiden Führungsholme 212 und 213 mit der Verzahnung 215 des Antriebsprofils 214 sind über den Haltebügel 230 miteinander verbunden, genauer über dessen Querstange 233 (siehe Figs. 3 und 5).

Das Mastelement 210 der vorliegenden Ausführung weist überdies eine Leiter 20 mit Steigschutzschiene 23 auf. In Notfällen, wenn der Aufzug 2 ausfallen sollte, müssen im Turm befindliche Personen absteigen können. Hierfür ist entsprechend eine Notleiter mit Auffangeinrichtung, an der sich die Arbeiter einhaken können, vorgesehen. Diese Leiter 20 verläuft zwischen den beiden Führungsholmen 212 und 213 und wird wie diese von der Querstange 233 des Haltebügels 230 fixiert und in Position gehalten.

Der Haltebügel 230 hat bevorzugt folglich mehrere Funktionen. Er dient der Fixierung und Beabstandung der beiden Führungsholme 212, 213 und er dient der Fixierung und Halterung der Notleiter, also der Leiter 20, sowie weiterer Bauteile wie Kabeltrassen oder Ähnliches. Ferner ist er bei der Errichtung des Zahnstangenaufzugsmastes 1 insofern beteiligt als er der gelenkigen Anbindung an die Turmwand 57, 157 und an das Mastelement 210 dient. Transport und Montage sind dadurch erleichtert. Schließlich sichert und hält er den Mast im aufgebauten Zustand zur Seite hin, und das aufgrund der gelenkigen Anbindung auf eine nachgiebige Art und Weise, so dass das Mastmaterial geschont wird.

Der Haltebügel 230 ist gelenkig mit dem Mastelement 210 verbunden. Insbesondere in den Figs. 3 und 6 ist die gelenkige Halterung des Mastelements 210 näher dargestellt. Der Haltebügel 230 ist gelenkig, über das Gelenk 237, mit dem Mastelement 210 verbunden. Zugleich ist ein zweites Gelenk 238 zur Turmwand 57, 157 (vgl. Figs. 1 und 2) hin vorgesehen. Die Halteteile 231 und 232 werden über entsprechende Verankerungsmittel (Bezugszeichen 165 - Fig. 2 und 365 - Fig. 7) in der Turmwand verankert. In Fig. 6 ist über den eingetragenen Winkel γ die Verstellbarkeit des Haltebügels 230 angedeutet.

Weiterhin gut zu sehen sind in Fig. 6 die Mittel, über welche die einzelnen Mastelemente 210 übereinander aufgestapelt und insbesondere miteinander verbunden werden. Hierzu sind am oberen Ende 225 jedes Mastelements 210 Verbindungslaschen 221 vorhanden und am jeweiligen unteren Ende 226 entsprechende Aufnahmen 222 und Verschraubungsbohrungen 224. Die Mastelemente 210 werden folglich aufeinandergesetzt, rasten über die Verbindungslaschen 221 in die entsprechenden Aufnahmen 222 ein und werden dann anschließend miteinander über die Bohrung 224 verschraubt.

In den Figuren 7 ist der schrittweise Aufbau eines Turmes 350 aus einzelnen Turmelementen 360, genauer eines ersten Turm-Teils 353, wie beispielsweise der Betonturmteil eines Hybridturms einer Windkraftanlage, mit der zeitgleichen Errichtung eines Zahnstangenaufzugsmastes 301 dargestellt.

Gezeigt sind jeweils eine schematisierte Schnittansicht (linke Seite) und eine schematisierte perspektivische Darstellung (rechte Seite). Zur besseren Lesbarkeit sind, wie in den übrigen Figuren auch, nicht in allen Figuren 7 alle Bezugszeichen eingetragen. Die Beschreibung bezieht sich jedoch auf sämtliche Figuren 7, sodass im Bedarfsfall die Bezugszeichen einer anderen Unter-Figur zu entnehmen sind.

In den Figuren 7A und 7B ist das Aufstellen des ersten Turmelements 360, hier des ersten Turmabschnitts 351^{I} mit dem ersten Mastelement 310^{I} gezeichnet. Wie bereits ausführlich anhand der Figuren 1 und 2 erläutert, wird das Mastelement 310^{I} auf dem Turmboden 352 abgestellt. Es ist eine höhenverstellbare Plattform 305 vorgesehen. In der Ausführung der Figur 7 handelt es sich hierbei um zwei einzelne höhenverstellbare Plattformen 305^{I}, 305^{II}, in der Art von höhenverstellbaren Fußteilen, jeweils angebracht unter dem ersten und zweiten Führungsholm 312, 313 (vgl. z. B. Fig. 7B).

In der Ausführung der Figur 7 handelt sich bei der höhenverstellbaren Plattform 305 um einen Spindeltrieb. Alternativ können pneumatisch oder hydraulisch verstellbare Plattformen 305 vorgesehen sein.

Die Größe der Plattform ist frei wählbar. In der Ausführung der Fig. 7 ist eine verhältnismäßig kleine, Stellfläche sparende Plattform 305^{I}, 305^{I} genutzt - anders als in den Fig. 2, wo die Plattform 5 sehr viel größer ist und eine einzige Plattform 5 vorgesehen ist, auf der das Mastelement 10 als Ganzes, also je nach Ausführung mit einem einzigen Führungsprofil-Antriebsprofil-Kombi-Holm oder mit den unteren Enden von zwei Führungsholmen abgestellt ist.

Das Mastelement 310^{I} ist über den Haltebügel 330 mit der Turmwand 357 des ersten Turmabschnittes 351^{I} fest verbunden. Hierfür ist an Aufnahmepunkten in der Wand 357 ein Verankerungsmittel 365 vorhanden, beispielsweise einbetoniert oder eingeschraubt. Der Haltebügel 330 wird über die beiden Halteteile 331, 332 mit dem Verankerungsmittel 365 gelenkig verbunden; hierdurch ergibt sich die gelenkige Turmwandhalterung 334. Darüber hinaus ist ein weiteres Gelenk zwischen dem ersten bzw. zweiten Halteteil 331, 332 und jeweils der Querstange 333 vorhanden, die gelenkige Mastelementhalterung 335.

Die Querstange 333 verbindet und hält im richtigen Abstand zueinander die Bestandteile des Mastelementes 310, nämlich das erste Führungsprofilmodul 316 und das zweite Führungsprofilmodul 317 sowie das Antriebsprofilmodul 318 mit Verzahnung 315.

In der Ausführung der Figuren 7 ist daneben auch noch eine Leiter 20 sowie eine Steigschutzschiene 23 vorhanden, wie zuvor anhand der Figuren 3 bis 6 schon erklärt.

Wie ebenfalls zuvor schon erläutert, ist der Zahnstangenaufzug 302 unmittelbar nach dem Errichten des ersten Mastelementes 310^{I} einsatzbereit. Der Aufzug kann und darf sofort in Betrieb genommen werden, was die Bauarbeiter äußerst vorteilhaft finden werden, denn insbesondere, wenn der Turm 350 weiter wächst, ist hierdurch eine zuverlässige und sichere Beförderungsmöglichkeit bereitgestellt, mit der die Arbeiter während der Turmmontagearbeiten schnell und sicher hoch- und runterfahren können.

Die Figuren 7C und 7D zeigen, zusammen mit den Figuren 7E, 7F und 7G, 7H, das Aufsetzen und den Anschluss eines weiteren Turmabschnittes 351^{II}, aufweisend ein weiteres Mastelement 310^{II}.

Wenn der erste Turmabschnitt 351^{I} fertig erreichtet ist, wird der zweite Turmabschnitt 351^{II} aufgesetzt. Hierzu wird der Turmabschnitt 351^{II}, einschließlich vormontiertem Mastelement 310^{II} - wie in Figur 7D beispielhaft gezeigt - mit dem Kran angehoben und auf dem oberen Rand 358 der Turmwand 357 des unteren Turmabschnitts 351^{I} abgesetzt und mit diesem fest verbunden, beispielsweise mit Hilfe von Zapfen oder anderen Verbindungsmitteln.

Wie in Figur 7C/7D sehr gut zu erkennen ist, ist das Mastelement 310^{II} beim Transport gesichert und eingeklappt, sodass sich das Mastelement 310^{II} nahe an der Turmwand 357 befindet. Das Mastelement 310^{II} ist typischerweise über eine (nicht dargestellte) Transportsicherung fixiert, sodass die vorhandenen Gelenke im Haltebügel 330 festgestellt sind. Dies kann beispielsweise dadurch geschehen, dass die Gelenke selbst fixiert werden, oder dass ein separates Sicherungsmittel vorhanden ist, das beispielsweise mit der Turmwand 357 verschraubt ist. Das Anbringen einer Transportsicherung ist für die Fachperson eine gängige Maßnahme.

In den Figuren 7E und 7F ist der zweite Turmabschnitt 351^{II} bereits auf dem unteren Turmabschnitt 351^{I} abgesetzt; die beiden Turmabschnitte sind miteinander verbunden. Das zweite Mastelement 310^{II} ist aber noch nicht mit dem unteren Mastelement 310^{I} verbunden worden. Es wurden jedoch bereits die Transportsicherungen gelöst und das Mastelement 310^{II} wurde aus seiner abgeklappten Position (vgl. Figs. 7C und 7D) angehoben mit Hilfe einer Hebeeinrichtung, beispielsweise dem bauseitig vorhandenen Kran, wie angedeutet in Figur 7E durch den Pfeil G.

Das mit dem Kran angehobene Mastelement 310^{II} wird auf dem Mastelement 310^{I} abgesetzt und wird mit diesem fest verbunden. Hierfür wird die Aufnahme 322 des Mastelementes 310^{II} auf die Verbindungslasche 321 des Mastelementes 310^{I} aufgesetzt und die Verbindungslasche 321 wird über die Verschraubungsbohrung 324 festgeschraubt. Hierdurch werden die Mastelemente 310^{I} und 310^{II} aneinander fixiert - vgl. Figs. 7G und 7H - Verbindung 306.

Wie vorstehend anhand der Figuren 7C bis 7H erläutert, wird der Turm durch das Aufsetzen und Verbinden von weiteren Turmelementen 360 bzw. Turmabschnitten 351 aufgebaut, bis beispielsweise die endgültige Höhe erreicht ist, wodurch der vollständige Zahnstangenaufzugsmast aufgebaut worden ist. Dies ist der Fall bei Türmen, die aus einem einzigen Material bestehen und die nicht allzu hoch sind.

Windkraftanlagen, die derzeit bereits mit einer Nabenhöhe von 150 Metern gebaut werden und künftig noch höher werden sollen, werden jedoch üblicherweise in Hybridbauweise errichtet. In diesem Fall werden weitere Turmabschnitte 351, jeweils einschließlich vorgefertigten und vormontierten Mastelementen 310, übereinandergesetzt und miteinander verbunden, so lange bis der Übergang zum zweiten Material erreicht ist. Typischerweise besteht der untere Teil aus Beton, wobei in der Regel im Werk vorgefertigte einzelne Betonsegmente miteinander zu einem einzelnen Turmabschnitt verbunden werden. Üblicherweise handelt es sich hierbei um drei Segmente pro Turmabschnitt. Der obere Teil eines Hybridturms ist z. B. aus einzelnen Stahlröhren aufgebaut, die ebenfalls wiederum abschnittsweise vorgefertigt sind, sodass Rohrabschnitt um Rohrabschnitt aufeinandergesetzt werden kann, bis die endgültige Höhe erreicht ist. Der Aufbau des erfindungsgemäßen Zahnstangenaufzugs 1 in einem derartigen Hybridturm wurde schematisch bereits anhand der Figuren 2 erläutert.

In den Figuren 7I bis 7L ist dargestellt, wie der Zahnstangenaufzugsmast-Teil im unteren Turm-Teil 353 an einen entsprechenden Adapter 356, das Verbindungsglied 362, welcher an einer Zwischenplattform 355 vorhanden ist, angeschlossen wird. Es sei angemerkt, dass der Adapter 356 nur schematisch dargestellt ist.

Um den ersten Turm-Teil 353 auszubilden, wurden vorliegend drei Turmabschnitte 351 übereinandergesetzt, 351^{I}, 351^{II} und 351^{III}. Es versteht sich von selbst, dass die Anzahl der übereinander zu setzenden Turmabschnitte 351 allein davon abhängt, wie hoch der Turm 350 gebaut werden soll und wie hoch die einzelnen Turmabschnitte 351 sind.

Die Mastelemente 310^{I}, 310^{II} und 310^{III} wurden aufeinander aufgesetzt und miteinander zum Zahnstangenaufzugsmast 301 verbunden, genauer zu dem Teil 301^{I} des Zahnstangenaufzugsmastes 301, der im Turmunterteil eingebaut ist.

Wie anhand von Figur 7I gut zu sehen ist, reicht das oberste Mastelement 310^{III} zwar an das Verbindungsglied 362, hier den Adapter 356 heran; ein Anschluss daran ist jedoch nicht möglich. Das Hochdrücken des Zahnstangenaufzugsmastes 301, damit dieser an den Adapter 356 angeschlossen werden kann (Figs. 7K/7L), erfolgt mit Hilfe der höhenverstellbaren Plattform 305 am Fuße des Zahnstangenaufzugsmastes 301, d. h. unterhalb des ersten Mastelementes 310^{I}. Durch das Höhenverstellen der Plattform 305 wird der gesamte Zahnstangenaufzugsmast 301 nach oben gehoben - Pfeil H (Fig. 7K) - und kann dann an entsprechende Führungsholmteile 316, 317 und Antriebsprofilteile im Adapter 356 - nicht dargestellt - angeschlossen und damit fest verbunden werden.

Auf diese Art und Weise wird insbesondere die Verzahnung 315 des Antriebsprofils 314 weitergeführt und durch die Plattform 355 hindurchgeführt, damit entsprechend weitere Mastelemente 310 im Turmoberteil (vgl. Figuren 2E-G) angeschlossen werden können, sodass sich nach Beenden der Aufbauarbeiten ein durchgängig befahrbarer Zahnstangenaufzugsmast 301 ergibt. Dieser Zahnstangenaufzugsmast 301 weist keinerlei bzw. keine merklichen Übergänge zwischen den einzelnen Zahnstangenteilen auf. Damit ist die Betriebssicherheit des Zahnstangenaufzugs 301 gewährleistet.

In den Figuren 8A und 8B sind das Detail B aus Figur 7I und das Detail D aus Figur 7K herausgezeichnet. In Figur 8C ist überdies eine weitere Ausführung vorgestellt, in Alternative zur Ausführung der Figur 8B.

Wie schon zuvor erläutert, wird zum Aufbau des Zahnstangenaufzugsmastes 301 das unterste Mastelement 310^{I} auf der höhenverstellbaren Plattform 305 abgestellt. Die Plattform 305 ist höhenverstellbar, d. h. sie kann angehoben werden - in anderen Worten, ungefähr lotrecht zum Untergrund kann der Abstand der Plattform 305 zum Untergrund vergrößert bzw. verkleinert werde - Doppelpfeil Z. Hierdurch kann das auf der Plattform 305 angeordnete Mastelement 310 und, sofern weitere Mastelemente 310 auf demselben montiert worden sind, somit der gesamte Zahnstangenaufzugsmast 301 hochgedrückt werden - die Distanz H zum Untergrund ändert sich, Distanz H^{I}.

Dieses Hochdrücken ist erforderlich beispielsweise zum Anschluss an den Adapter 356, wie zuvor beispielhaft anhand der Figuren 7 erläutert. Eine Lageveränderung des Zahnstangenaufzugsmastes 301 in vertikaler Richtung kann jedoch auch erforderlich sein, um beispielsweise ein beschädigtes Mastelement 310 auszutauschen. Wenn sich im Laufe der Zeit der gesamte Turm 350 absenkt, kann es erforderlich sein, den Zahnstangenaufzugsmast 301 neu auszurichten, was ebenfalls das Verändern der vertikalen Lage des Zahnstangenaufzugsmastes 301 erforderlich machen kann.

Aus diesem Grunde wird bevorzugt die höhenverstellbare Plattform 305 auch nach dem vollständigen Errichten bzw. nach dem Anschluss des unteren Teils des Zahnstangenaufzugsmastes 301 an einen entsprechenden Adapter 356 im Bereich zwischen zwei Turmteilen bzw. auf grob gesprochen halber Höhe des Turms 350, selbst nach dem Fertigstellen des Zahnstangenaufzugsmastes 301 bzw. des gesamten Aufzugs 302, an Ort und Stelle im Turm 350 belassen.

In einer alternativen Ausführungsform wird die höhenverstellbare Plattform 305 nach der Montage des Zahnstangenaufzugmastes 301 bzw. nach Abschluss der Errichtungsarbeiten des Zahnstangenaufzugs 302 entnommen. Diese Situation ist dargestellt in Figur 8C. Der Zahnstangenaufzugsmast 301 ist nach unten, zum Untergrund hin nicht mehr abgestützt, sondern hängt ausschließlich irgendwie am Turm 350, beispielsweise über dem Adapter 356 am Übergang vom unteren Turm-Teil 353 zum oberen Turm-Teil (nicht dargestellt in den Figs. 7 - vgl. Fig. 2). Selbstverständlich könnte die höhenverstellbare Plattform 305 für Revisionsarbeiten zu einem späteren Zeitpunkt auch wieder eingebracht werden.

Die in den einzelnen Figuren gezeigten Ausgestaltungsmöglichkeiten lassen sich auch untereinander in beliebiger Form verbinden.

**Bezugszeichenliste**

| **Nr.** | **Merkmal** |
|---|---|
| 1, 301 | Zahnstangenaufzugsmast |
| 2, 302 | Aufzug |
| 3, 303 | Fahrschlitten |
| 4, 304 | Fahrkorb |
| 5, 305 | höhenverstellbare Plattform |
| 6, 306 | Verbindung |
| 10, 210, 310 | Mastelement |
| 11, 211, 311 | Führungsprofil |
| 212, 312 | erster Führungsholm |
| 213, 313 | zweiter Führungsholm |
| 14, 214, 314 | Antriebsprofil |
| 215, 315 | Verzahnung |
| 216, 316 | erstes Führungsprofilmodul |
| 217, 317 | zweites Führungsprofilmodul |
| 218, 318 | Antriebsprofilmodul |
| 219 | Führungsfläche |
| 20 | Leiter, insbesondere Notleiter |
| 221, 321 | Verbindungslasche |
| 222, 322 | Aufnahme |
| 23 | Steigschutzschiene |
| 224, 324 | Verschraubungsbohrung |
| 225, 325 | oberes Ende |
| 26, 226, 326 | unteres Ende |
| 30, 230, 330 | Haltebügel |
| 231, 331 | erster Halteteil |
| 232, 332 | zweiter Halteteil |
| 233, 333 | Querstange |
| 34, 334 | gelenkige Turmwandhalterung |
| 35, 235, 335 | gelenkige Mastelementhalterung |
| 237 | Gelenk zum Mastelement |
| 238 | Gelenk zur Turmwand |
| 50, 150, 350 | Turm |
| 51, 151, 351 | Turmabschnitt |
| 52, 152, 352 | Turmboden |
| 153, 353 | erster Turm-Teil, insbesondere Betonturmteil |
| 154 | zweiter Turm-Teil, insbesondere Stahlturmteil |
| 155, 355 | Zwischenplattform |
| 156, 356 | Adapter |
| 57, 157, 357 | Turmwand |
| 358 | oberer Rand |
| 359 | Verbindung |
| 60,360 | Turmelement |
| 161 | Turmabschnitt des zweiten Turm-Teils |
| 162, 362 | Verbindungsglied |
| 165, 365 | Verankerungsmittel |
| 80 | Kraftaufnahme |
| F | Pfeil |
| G | Pfeil |
| H | Distanz |
| Z | Doppelpfeil |
| A | Doppelpfeil |
| α | Winkel |
| β | Winkel |
| γ | Winkel |

## Patentansprüche

1. Verfahren zur Errichtung eines Zahnstangenaufzugsmastes (1, 301) in einem Turm (50, 150, 350), insbesondere in einem Turm einer Windkraftanlage, gleichzeitig mit einem Aufbau des Turms,
wobei der Turm aus einzelnen, vorgefertigten Turmelementen (60, 360) wie Turmabschnitten (51, 151, 351) aufgebaut wird,
wobei der Zahnstangenaufzugsmast zumindest ein Führungsprofil (11, 211, 311), insbesondere einen Führungsholm (212, 213, 312, 313), und ein Antriebsprofil (14, 214, 314) mit einer Verzahnung (215, 315), insbesondere eine Zahnstange, aufweist und aus mehreren einzelnen Mastelementen (10, 210, 310) errichtet wird, die miteinander zu dem Zahnstangenaufzugsmast verbunden werden,
wobei jedes Mastelement ein Führungsprofilmodul (216, 316) und ein Antriebsprofilmodul (218, 318) aufweist,
wobei die Mastelemente an den Turmelementen gelenkig angebunden sind, wodurch eine Relativposition der Mastelemente in dem Turm verändert werden kann,
wobei auf einem Untergrund in dem Turm, insbesondere einem Turmboden (52, 152, 352), eine höhenverstellbare Plattform (5, 305) aufgestellt wird, auf welcher ein unterstes Mastelement (10^{I}, 210^{I}, 310^{I}) des Zahnstangenaufzugsmasts angeordnet wird, wobei auf dem untersten Mastelement ein weiteres Mastelement (10^{II}, 210^{II}, 310^{II}) abgesetzt wird und mit diesem verbunden wird, worauf wiederum weitere Mastelemente abgesetzt und jeweils mit dem davor angeordneten Mastelement verbunden werden, wodurch der Zahnstangenaufzugsmast errichtet wird,
wobei mit der höhenverstellbaren Plattform das unterste Mastelement angehoben oder abgesenkt wird, um eine Distanz (H, H^{I}) des untersten Mastelementes zu dem Untergrund anzupassen,
wodurch die Mastelemente so zu dem Zahnstangenaufzugsmast gefügt werden, dass alle aneinandergereihten Antriebsprofilmodule eine durchgängige Verzahnung aufweisen.

2. Verfahren nach Patentanspruch 1,
**dadurch gekennzeichnet, dass**
die Mastelemente (10, 210, 310) in den Turmelementen (60, 360) vormontiert werden, wobei die Mastelemente an einer Turmwand (57, 157, 357) des Turmelements über einen Haltebügel (30, 230, 330), der gelenkig an der Turmwand und an dem zugehörigen Mastelement angebracht ist, gelenkig angebunden werden,
und wobei beim Aufbau des Turms (50, 150, 350) die Turmelemente übereinander gesetzt und zu dem Turm miteinander verbunden werden, wobei jedes Mastelement jedes Turmelements mit dem Mastelement des darunter befindlichen Turmelements verbunden wird, wodurch der Zahnstangenaufzugsmast (1, 301) nach und nach errichtet wird.

3. Verfahren nach Patentanspruch 1 oder 2,
**dadurch gekennzeichnet, dass**
ein erstes Mastelement (10, 210, 310) mit Hilfe einer Hebeeinrichtung, insbesondere einem Kran oder einem Hebezeug, auf die höhenverstellbare Plattform (5, 305) gehoben und positioniert wird, wobei es über seine gelenkige Anbindung verschwenkt wird bei gleichzeitiger seitlicher Führung und Sicherung, und dass jedes weitere Mastelement (10, 210, 310) einzeln auf das erste Mastelement bzw. ein darauf aufgebautes Mastelement gehoben, positioniert und mit einem vorgereihten Mastelement gefügt wird.

4. Verfahren nach einem der vorstehenden Patentansprüche,
**dadurch gekennzeichnet, dass**
entweder das Antriebsprofilmodul (218, 318) mit dem Führungsprofilmodul (216, 316) fest verbunden ist, insbesondere vernietet, verschraubt oder verschweißt ist,
oder das Antriebsprofilmodul (218, 318) mit dem Führungsprofilmodul (216, 316) einstückig ist, insbesondere dass es ein Profilmodul mit einer Führungsfläche (219) und der Verzahnung (215, 315) ist.

5. Verfahren nach einem der vorstehenden Patentansprüche,
**dadurch gekennzeichnet, dass**
das Mastelement (10, 210, 310) zwei Führungsprofilmodule (216, 217, 316, 317), insbesondere zwei Führungsholme (212, 213, 312, 313), aufweist, die miteinander fest und in festem Abstand verbunden sind, und dass das Antriebsprofilmodul (218, 318) ein Teil eines der beiden Führungsprofilmodule ist, insbesondere indem es mit dem Führungsprofilmodul fest verbunden ist oder dass es ein integraler Bestandteil des Führungsprofilmoduls ist.

6. Verfahren nach einem der vorstehenden Patentansprüche,
**dadurch gekennzeichnet, dass**
der Zahnstangenaufzugsmast (1, 301) direkt und unmittelbar auf der höhenverstellbaren Plattform (5, 305) aufgebaut wird und darauf auch nach dem Aufbau stehen bleibt.

7. Verfahren nach einem der Patentansprüche 1 bis 5,
**dadurch gekennzeichnet, dass**
ein Verbindungsglied wie ein Adapter (156, 356) bereitgestellt wird, welches zwischen zwei Mastelementen (10, 210, 310) eingebaut wird, welches diese beiden Mastelemente miteinander verbindet und welches mit dem Turm (50, 150, 350) verbunden wird, wobei das Verbindungsglied (162, 362) einen Teil des Führungsprofils (11, 211, 311) und einen Teil des Antriebsprofils (14, 214, 314) enthält, so dass nach einem Anbinden der beiden Mastelemente eine Durchgängigkeit der Verzahnung (215, 315) und des Führungsprofils gegeben ist.

8. Verfahren nach Patentanspruch 7,
**dadurch gekennzeichnet, dass**
ein unterhalb des Verbindungsglieds befindlicher Teil des Zahnstangenaufzugsmastes (1, 301) an dem Verbindungsglied aufgehängt wird und dass ein oberhalb des Verbindungsglieds befindlicher Teil des Zahnstangenaufzugsmastes auf dem Verbindungsglied steht, so dass sich eine Kraftaufnahme (80) für den Zahnstangenaufzugsmast in der Turmwand (57, 157, 357) befindet, insbesondere ungefähr auf halber Höhe des Turms (50, 150, 350).

9. Verfahren nach Patentanspruch 7 oder 8,
**dadurch gekennzeichnet, dass**
der Zahnstangenaufzugsmast (1, 301) in einer Windkraftanlage mit einem Hybridturm aus einem ersten Turmwandmaterial und einem zweiten Turmwandmaterial, insbesondere mit einem Beton-Stahl-Hybridturm, errichtet wird und dass das Verbindungsglied an einem Übergang von dem ersten Turmwandmaterial, insbesondere dem Betonteil (153, 353), zu dem zweiten Turmwandmaterial, insbesondere dem Stahlteil (154), eingebaut wird.

10. Verfahren nach Patentanspruch 8 oder 9,
**dadurch gekennzeichnet, dass**
der unterhalb des Verbindungsglieds befindliche Teil des Zahnstangenaufzugsmastes (1, 301) als Ganzes mit Hilfe der höhenverstellbaren Plattform (5, 305) in seiner Distanz zum Untergrund eingestellt, insbesondere angehoben wird, um eine Verbindung des obersten Mastelementes (10, 210, 310) des unterhalb des Verbindungsglied befindlichen Teils des Zahnstangenaufzugsmastes mit dem Verbindungsglied herzustellen und dieses oberste Mastelement von unten an das Verbindungsglied anzuschließen.

11. Verfahren nach einem der Patentansprüche 7 bis 10,
**dadurch gekennzeichnet, dass**
das unterste Mastelement und weitere Mastelemente (10, 210, 310), insbesondere alle Mastelemente, die jenen Teil des Zahnstangenaufzugsmastes (1, 301) ausmachen, der sich unterhalb des Verbindungsglieds befindet, in einem ersten Schritt miteinander verbunden werden und in einem zweiten Schritt im verbundenen Zustand mit einer Hebeeinrichtung, insbesondere mit einem Kran, angehoben und auf der höhenverstellbaren Plattform (5, 305) abgesetzt werden, indem das unterste Mastelement auf der höhenverstellbaren Plattform angeordnet wird, woraufhin mit der Plattform eine Höhenangleichung der verbundenen Mastelemente durchgeführt wird.

12. Verfahren nach einem der Patentansprüche 7 bis 11,
**dadurch gekennzeichnet, dass**
die höhenverstellbare Plattform (5, 305) nach dem Errichten des Zahnstangenaufzugsmastes (1, 301) entnommen wird.

13. Verfahren nach einem der Patentansprüche 2 bis 12,
**dadurch gekennzeichnet, dass**
der Haltebügel (30, 230, 330) nach einem Vormontieren der Mastelemente (10, 210, 310) in den Turmelementen für ein Verbringen des Turmelements arretiert wird, so dass das Mastelement während des Verbringens fixiert ist, und dass der Haltebügel gelöst wird, nachdem das Turmelement platziert und ausgerichtet und das Mastelement mit der Hebeeinrichtung abgefangen und entlastet worden ist.
